# EUROPEAN PATENT APPLICATION

(11) **EP 2 962 551 A1**
(43) Date of publication of application: **06.01.2016**
(21) Application number: 14757167.3
(22) Date of filing: 26.02.2014
(51) Int. Cl.: A01G 31/02, C02F 3/32

(54) **MODULAR SYSTEM FOR THE SUSPENSION OF MACROPHYTE PLANTS FOR NATURAL PURIFICATION OF WATER**

(30) Priority: 01.03.2013 ES 201330296
(71) Applicant: Quarq Enterprise, S.A., 06002 Badajoz (ES)
(72) Inventor: SEMENOVA, Alena, 15000 Praha 5 (CZ)
(74) Representative: Pons Ariño, Angel
(86) International application number: PCT/ES2014/070145
(87) International publication number: WO 2014/131928

(57) **Abstract**

The invention concerns a modular system comprising a plurality of identical modules (1) which are produced as injected low-density plastics monopart bodies and can therefore float in water, the modules (1) have coupling means (3, 4) for forming by interconnection of a plurality of modules (1) a floating surface or sheet for macrophyte plants. To that end, provided in each module (1) are vessels (5) which are kept rigid by means of arms (6), in a reticular structure of triangular templates, the inter-coupling of a plurality of modules (1) forming a surface floating on water such that the growth on the vessels (5) of the plants which will become macrophytes brings about the purification of the water in which the surface of the floating structure is located.

## Description

### OBJECT OF THE INVENTION

The present invention relates to a modular system for the suspension of macrophyte plants for the natural purification of water, a system which establishes an installation of floating surface sheets for water purification, using macrophyte plants. The objective of the invention is to achieve a cost reduction, as well as a greater functional efficiency with respect to other pre-existing systems and foreseen for the same purposes.

### BACKGROUND OF THE INVENTION

As is known, macrophyte plants correspond to a family of water plants whose density is less than water, for which reason they float on it.

Nevertheless, the fundamental property of macrophyte plants is that by means of their system of geomembranes, they naturally inject the amount of oxygen that the water and the surrounding sludge need to not degrade, whilst they secrete acids that kill the pathogenic bacteria in water.

In short, macrophyte plants manage to eliminate organic waste, whilst heavy materials such as nitrates, phosphates and other inorganic pollutants are directly absorbed by the plants.

In other words, the final result is that the macrophyte plants manage to purify all the pollutants of a wetland wherein they grow and this in an ecological and sustainable manner, without producing odours or sludge or other solid waste, and maintaining their regeneration capacity of the water practically the same throughout the year, irrespective of the seasons and different climates. A practical application of the abovementioned is disclosed in patent of invention 200930721, wherein it discloses a system and means or devices to aid in the planting and growth of floating plant species of macrophyte type, in uses designed for water purification. Specifically, the system and devices referred to in that patent of invention are based on the inter-assembly of a plurality of floating structures, as supports for flat lattice structures whereon are mounted in turn baskets or cones whereon the plant in question is positioned. In other words, the floating structure disclosed in this patent of invention 200930721 comprises three independent parts, one as floating structure which can be attached to other similar ones, another flat lattice structure which is mounted on the previous and forms the support for the third element of the assembly or joint structure, and which corresponds to a basket or cone for the plants.

The solution proposed in said patent of invention has numerous and considerable problems and drawbacks, which correspond to the following:
- Each module is formed by three parts or pieces, one the floating structure, another that which corresponds to the supports of the vessels or cones, and another which corresponds to the recipient vessels or cones of the plants, so that it is necessary to manufacture three independent components, different from one another and then conveniently couple them together.
- The modules of that patent of invention do not allow a homogeneous distribution of the plants, neither in unitary form inside each module, nor overall on the surface floating structure.
- Another disadvantage or drawback is that the modules, due to plant distribution and assembly systems, generate cavities or uncovered areas, precisely in the connection area between modules.
- Another drawback is that the means of connection between the different modules do not manage to give sufficient solidity to the assembly, regardless of whether assembly is not simple.
- Another drawback is that the modules use too much material in their manufacturing, being heavy and voluminous, and in short with high financial cost.
- It also has the drawback that the modules do not fulfil the measurement standards of European pallets for which reason their assembly is inefficient and more expensive.
- They cannot be stacked and, therefore, in their storage occupy a great volume, a drawback which is accentuated when it is necessary to transport the modules for their application.
- Furthermore, at the time of applying them in the field, it is necessary to have the properly trained operators or with previous training, since they need to handle at least three types of pieces for each module.

### DESCRIPTION OF THE INVENTION

The system claimed has been devised to resolve the aforementioned problems, and is not only a new concept of the pre-existing systems, but it is a new conceptual design, which makes it possible to achieve a new optimal, functional, ergonomic, efficient, high usability and low-cost product.

More specifically, the system of the invention is based on using single-piece modules, produced in a single injection casting with appropriate measurements and forms so that they can be stacked and occupy a minimum volume in their storage and transport, and on the other hand allow their handling by European measurement pallets.

The module is made of flexible low-density polypropylene which can float on the water.

The modules have catching elements for inter-coupling without leaving any type of cavity or separation, but it will form a fully continuous floating structure, and wherein each module is of a contour equivalent to that of a hexagon-based matrix, with protuberance and notch parts to achieve the inter-coupling and avoid free space between them when they are coupled, in addition to the framework forming each module being stiffened by arms which form triangular forms in each module, and the corresponding vessels or cones for the seedlings are positioned in the inter-sections of the triangles formed.

The inter-coupling means between modules are determined by protuberances by way of hooks with a certain flexibility, in correspondence with two of the sides of the module framework, whilst the other sides have areas of less thickness, for their precise fitting-in in the protuberances in the form of a hook, establishing a coupling or hooking by clipping which maintains the adjacent modules rigidly joined together.

The floating structure which is formed by means of the inter-coupling of a plurality of modules, serves to suspend macrophyte plants on surfaces of water, for example, those corresponding to lakes or water courses, or previously generated artificially, such as reservoirs, etc., originating in any case a homogeneous surface carpet, in the growth phase of the plants, so that once its natural size has been generated a surface plant sheet is generated which, in contact with dirty and polluted water which can be purified, they perform the biological purification of said water.

Based on the characteristics of the modules which establish the suspension system of the macrophyte plants, the solutions to the problems posed by the conventional systems correspond to following aspects:
- Use of a single piece which is simply and solidly assembled with others identical and collateral thereto, in unlimited number.
- The use of a single piece for each module entails a considerable saving in costs and working time compared with the modules formed from three independent inter-couplable parts.
- The modules are pieces which have a single assembly position, so that their handling is extremely simple and accessible to unexperienced personnel.
- It integrates the recipient vessels of the seedlings, which are located exactly in their interior, protected by a case of biodegradable material, with the recipient vessel having sufficient outlet cavities and breakage points so that when the seedling grows, its roots expand and they may even break the vessel if necessary.
- The spatial distribution of the recipient vessels in the different modules allows a mathematically homogeneous carpeting, even independently of where the edges of each unit are located.
- The distribution based on a triangular template in what is the structure of each module, makes it possible to choose different planting densities in accordance with the requirements of each intervention.
- The form and size of each module allows its transport in European pallet.
- The modules can be easily and exactly stacked, without losing space in height, drastically reducing the storage and transport volume.
- The inter-coupling system between modules is highly efficient, since it is solid, accurate, simple and free from complex systems, in addition to being fast to perform even by inexperienced hands and is easy to dismantle, since the coupling is performed by means of a clipping, as it has been previously stated, which allows its unidirectional, simple, fast, solid and reversible assembly.
- It is simple to manufacture and also economical, since it can be manufactured in any geographic area of the world having plastic injectors, where solely the injection moulds would have to be transported, with the particular characteristic that each piece requires a single injection cast, using much less material than the existing products, both in volume and weight, in short reducing costs.
- The modular system of the invention generates solid sheets which are wind and wave resistant, in all directions of the surface plane, and it allows it's fastening to the shore in a very simple manner, just by using simple tensioners.

Specifically, each module includes 16 seeding recipient vessels, following a template equivalent to that of a hexagon-based matrix in its perimeter which generates a mesh of triangular nodes, two of the sides having four connectors for each side, i.e. four hook protuberances for the inter-coupling, which are exactly inserted in the recesses of the collateral modules.

### DESCRIPTION OF THE DRAWINGS

To complement the description that will be made below and in order to aid towards a better understanding of the characteristics of the invention, in accordance with a preferred example of practical embodiment thereof, a set of drawings is attached as an integral part of said description wherein, with illustrative and non-limiting character, the following has been represented:

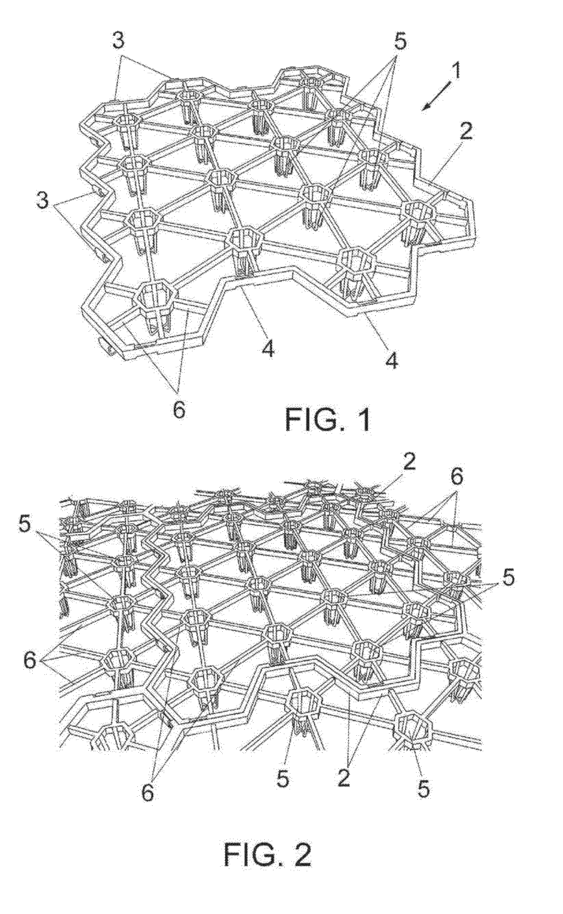

Figure 1.- Shows a representation corresponding to a top perspective of a module integrating the modular system for the suspension of macrophyte plants performed in accordance with the object of the invention.
Figure 2.- Shows a perspective view of the form of collateral inter-coupling between the different modules.

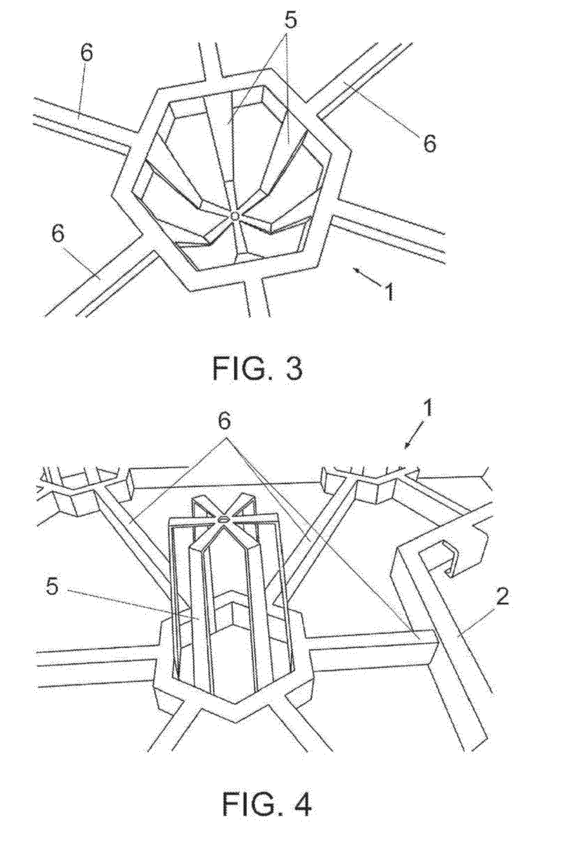

Figure 3.- Shows a top perspective detail of one of the vessels formed in the module represented in figure 1.
Figure 4.- Shows a bottom perspective view of the vessel represented in the previous figure.

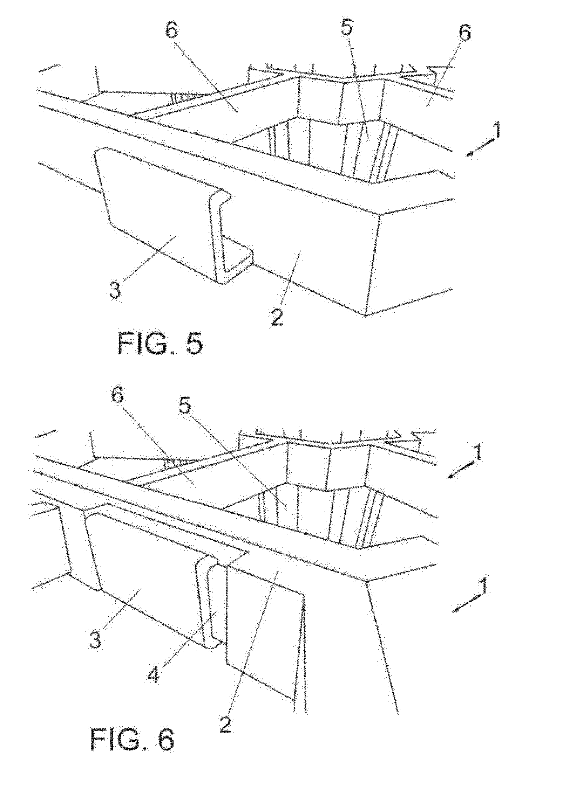

Figure 5.- Shows a detail of the side hook corresponding to the connector for the inter-coupling between modules.
Figure 6.- Shows a perspective view of the inter-coupling already performed between two modules.
Figure 7.- Shows a plan view of a plurality of inter-coupled modules, showing the continuity between them and consequently the lack of cavities in the inter-coupling.
Figure 8.- Shows, finally, a plan view of the form of stacking of a plurality of modules, with a minimum volumetric occupation.

### PREFERRED EMBODIMENT OF THE INVENTION

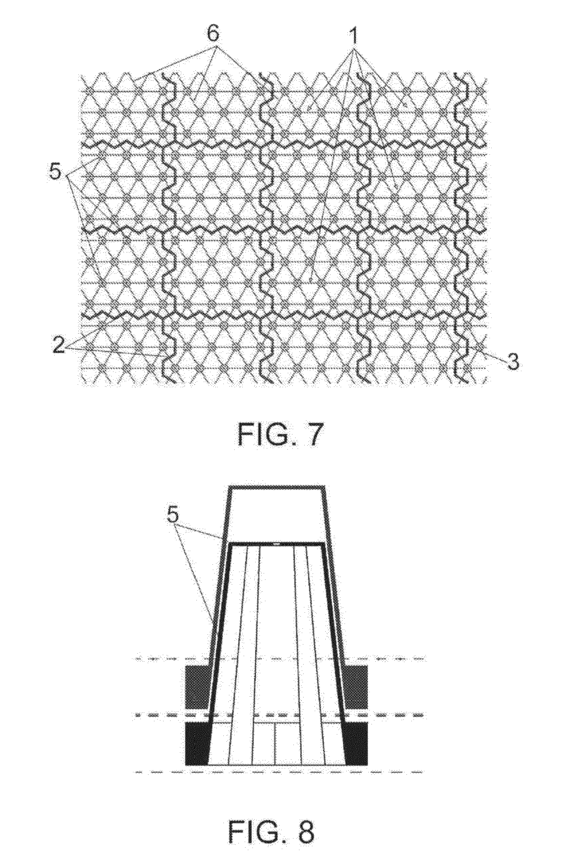

Based on the figures referred to, it can be observed how the modular system for the suspension of macrophyte plants for the natural purification of water, is based on the collateral inter-coupling of a plurality of modules (1), which are single-piece bodies produced by injection of low-density plastic, so that each module (1) has a configuration equivalent to that of a hexagon-based matrix, with notches and protuberances, as can be seen in the different figures, all in regular form, so that on some adjacent sides of the perimeter (2) of each module (1) hooking protuberances (3) have been provided, which correspond to connectors to collaterally inter-couple modules (1), recessed portions (4) being provided on other sides of that same module (1), which are complementary to the hooks or connectors (3), so that when two adjacent modules (1) are disposed in the convenient position, the recesses (4) of one of their sides are hooked by the connectors or hooks (3) provided in the corresponding side of the adjacent module. In this way, it obtains a connection of modules (1) which leaves no space between them, so that there is total use of the surface to cover. Each module (1) also includes a plurality of vessels (5) for the seedlings, which are stiffened by means of arms (6) forming a lattice of triangular template, as clearly represented in the figures. Furthermore, in figure 8 the perfect stacking between a plurality of modules (1) can be observed, showing the different vessels (5) some inside the others, and the superposition between one another of the arms (6) which form the triangular template in each module (1), arms (6) which are also superimposed in the stacking, forming a totally homogeneous unit, with minimum height and, therefore, a minimum volumetric occupation, both in storage and in transport.

## Claims

1. Modular system for the suspension of macrophyte plants for the natural purification of water, formed by a plurality of modules (1) which can be collaterally inter-coupled among them to form a floating structure with the incorporation of vessels (5) for the seedlings, the growth whereof shall entail the purification of the water wherein the laminar structure formed by the plurality of inter-coupled modules (1) is situated, **characterized in that** each module (1) is formed by a single-piece injected plastic body wherein both the perimeter (2) thereof, and the corresponding vessels (5) for the seedlings and the stiffening arms (6) are formed, having provided that the sides of the perimeter (2) of each module (1) have protuberances by way of complementary hooks or connectors (3) of recessed portions (4) of other sides of the same module (1) for the inter-coupling by clipping between adjacent modules.

2. Modular system for the suspension of macrophyte plants for the natural purification of water, according to claim 1, wherein the stiffening arms (6) of the vessels (5) for the seedlings have a triangular template.

3. Modular system for the suspension of macrophyte plants for the natural purification of water, according to claim 1, wherein each module (1) has its perimeter (2) of a contour equivalent to that of a hexagon-based matrix, with notches and protuberances for the inter-coupling of different modules and spaces between them.
